# EUROPÄISCHE PATENTANMELDUNG

(11) **EP 1 036 678 A2**
(43) Veröffentlichungstag der Anmeldung: **20.09.2000**
(21) Anmeldenummer: 00100621.2
(22) Anmeldetag: 13.01.2000
(51) Int. Cl.: B60G 21/05

(54) **Verbundlenkerhinterachse**

(30) Priorität: 13.03.1999 DE 19911282
(71) Anmelder: Thyssen Krupp Automotive AG, 44793 Bochum (DE)
(72) Erfinder: Harbig, Peter, 33824 Werther (DE); Schmitt, Michael, Bedford MK40 6QU (GB); Etzold, Dieter, 33813 Oerlinghausen (DE); Runte, Klaus, 33615 Bielefeld (DE); Jentsch, Kai Uwe, 47447 Moers (DE)

(57) **Zusammenfassung**

Die Erfindung bezieht sich auf eine Verbundlenkerhinterachse mit zwei Längslenkern (1) und einer zwischen den Längslenkern (1) angeordneten, durch spanloses Umformen hergestellten, doppelwandigen und im Querschnitt im wesentlichen U- oder V-förmigen, als Torsionsprofil ausgebildeten Querstrebe (2) mit ein oder mehreren im Querschnitt der Querstrebe (2) angeordneten Hohlkammern (5), (6).

Erfindungsgemäß ist die Querstrebe (2, 2 a bis 2 f) aus einem ebenen oder im wesentlichen ebenen Blech durch Walzen hergestellt, besitzt über ihrer gesamten Länge einen gleichbleibenden Querschnitt und die Enden des Bleches sind nach dem Walzen durch eine in Längsrichtung oder im wesentlichen in Längsrichtung der Querstrebe (2) verlaufende Schweißnaht (4) verbunden sind.

## Beschreibung

Die Erfindung bezieht sich auf eine Verbundlenkerhinterachse gemäß Oberbegriff des Anspruches 1.

Aus der EP 0 752 332 A1 und der DE 196 53 959 C1 sind gattungsgemäße Verbundlenkerhinterachsen bekannt, die einen an den Enden kreisrunden rohrförmigen, im mittleren Längenbereich durch spanlose Umformung jedoch doppelwandigen U-förmigen Querträger aufweisen. Die Abschnitte zwischen den kreisrunden Enden und den mittleren U-förmigen Längenbereichen gehen dabei kontinuierlich vom kreisrunden zum U-förmigen Querschnitt über. Der Querträger ist aus einem ursprünglich insgesamt kreisrunden Rohr durch spanlose Umformung in mehreren Einzelschritten hergestellt. Sowohl das Rohr als Ausgangsprodukt als auch dessen Umformung zu dem Querträger ist relativ aufwendig, weil sich der Querschnitt in Längsrichtung des Querträgers stark ändert.

Aus der EP 0 229 576 A1 ist eine Verbundlenkerhinterachse ersichtlich, wobei Längslenker und Querträger insgesamt aus einem Rohr ebenfalls durch spanloses Umformen hergestellt werden. Auch hierbei sind eine Vielzahl von komplizierten Umformvorgängen erforderlich, da zusätzlich die Längslenker geformt werden müssen.

In der EP 0 552 537 A1 ist eine Verbundlenkerhinterachse nach dem Doppelstabprinzip dargestellt, wobei der Querträger aus einem V-förmigen Blech mit an den freien Enden angeordneten Hohlkammern besteht. Zur Bildung der Hohlkammer sind die freien Enden nach außen umgebogen und mit den Schenkeln verschweißt. Hierbei müssen also mindestens zwei Schweißnähte angefertigt werden, wobei auch die Schwierigkeit besteht, die beiden Hohlkammern genau gleich groß auszubilden.

Der Erfindung liegt die Aufgabe zugrunde, eine Verbundlenkerhinterachse der beschriebenen Art vorzuschlagen, die aus einem preiswerten Ausgangsmaterial und durch einfache Umformvorgänge hergestellt werden kann.

Die Lösung der Erfindung ist im Patentanspruch 1 angegeben. Die Unteransprüche 2 bis 8 enthalten sinnvolle Ausführungsformen dazu.

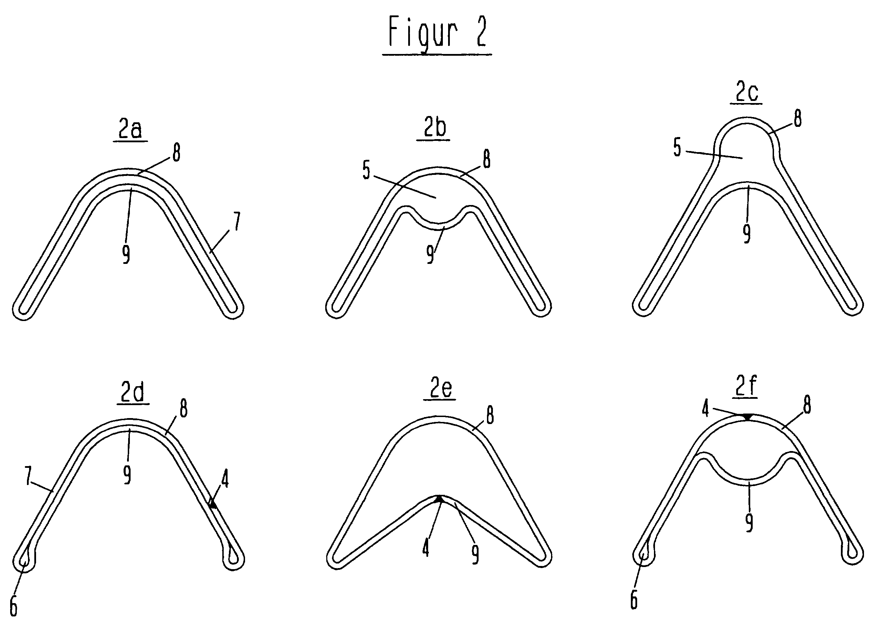

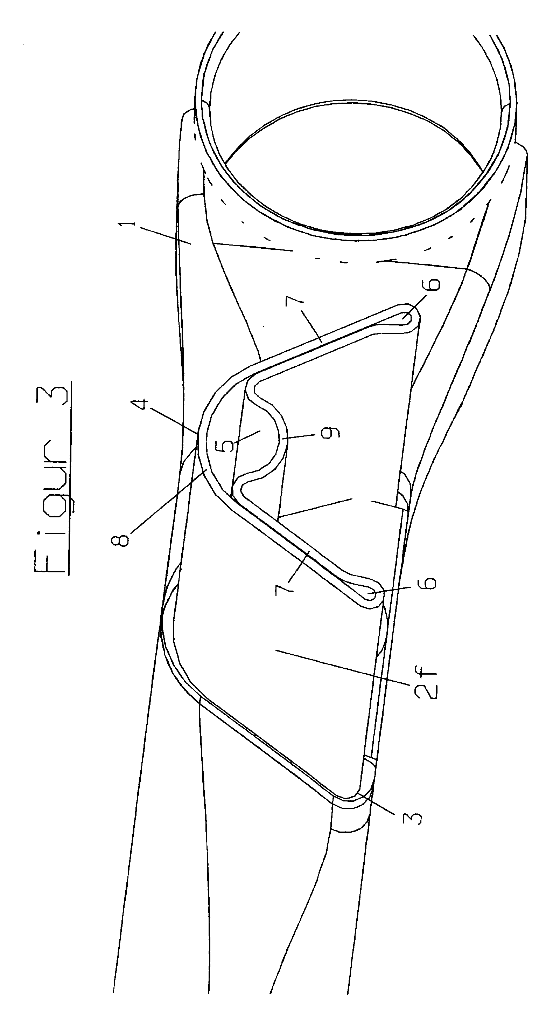

Erfindungsgemäß ist vorgesehen, daß der Querträger aus einem ebenen Blech, vorzugsweise einem Stahlband (Coil), durch Walzen hergestellt wird. Dazu wird aus einem Coil ein Blech in der Weise gewalzt, daß ein Querschnitt, wie in den Figuren 2 und 3 dargestellt, erreicht wird. Die beiden Enden bzw. Längsseiten des Bleches werden nach dem Walzen und Abschneiden durch eine in Längsrichtung der Querstrebe verlaufende Schweißnaht verbunden. Damit wird auf einfache Weise ein doppelwandiges Torsionsprofil hergestellt, das genau an den erforderlichen Stellen beliebige Hohlkammern besitzt. Hierdurch wird mit möglichst geringem Materialeinsatz des Werkstoffes Stahl ein besonders leichtes, aber trotzdem torsionssteifes Profil erreicht. Neben der Gewichts- und Kosteneinsparung ist insbesondere in Hinblick auf die gewünschte Lage des Schubmittelpunktes ein variabler Querschnitt der Querstrebe zu erreichen. Außerdem können insbesondere auch hochfeste Werkstoffe angewandt werden.

Die in den Figuren 2 und 3 dargestellten Profile sind in den Unteransprüchen 2 bis 6 näher definiert.

Je nach Ausführungsform kann die Schweißnaht zur Verbindung der beiden Enden bzw. Seitenkanten des Bleches mittig, d. h. vorzugsweise in der Symmetrieachse, im oberen oder unteren bogenförmigen Steg angebracht werden. Es ist aber auch möglich, die Schweißnaht in der inneren oder äußeren Blechwand eines Schenkels des Profiles oder am freien Ende eines Schenkels anzubringen. Durch die erfindungsgemäße Konstruktion ist insbesondere auch ein reproduzierbar genaues Profil der Querstrebe herstellbar.

Die Erfindung wird anhand der beigefügten Figuren 1 bis 3 beispielsweise näher erläutert. Es zeigen
- Figur 1: eine Gesamtansicht einer Verbundlenkerhinterachse
- Figuren 2 a bis 2 f: verschiedene Querschnitte der Querstrebe 2 und
- Figur 3: eine perspektivische Ansicht und einen vertikalen Querschnitt durch eine Querstrebe 2.

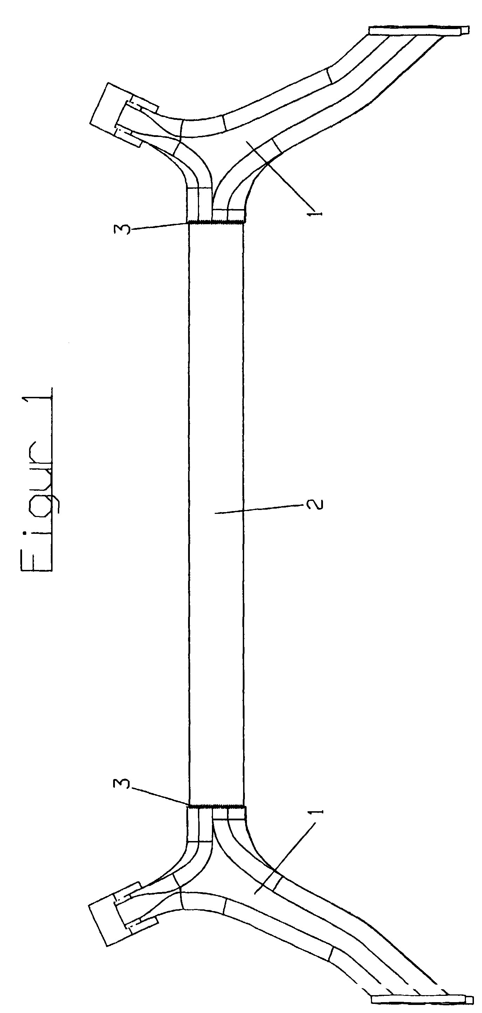

In der Figur 1 ist nur schematisch die grundsätzliche Konstruktion einer Verbundlenkerhinterachse für Kraftfahrzeuge dargestellt. Zwischen den beiden Längslenkern 1 ist dabei die Querstrebe 2 angeordnet, die über ihrer gesamten Länge einen gleichbleibenden Querschnitt besitzt und an den Enden über eine Schweißnaht 3 mit den Längslenkern 1 verbunden ist.

In Figur 3 ist als Ausschnitt und perspektivisch die Befestigung einer Querstrebe 2 f an einem Längslenker 1 mit Hilfe der Schweißnähte 3 dargestellt. Diese Querstrebe 2 ist wie die anderen Querstreben im wesentlichen V-förmig ausgebildet und besitzt eine basisseitige Hohlkammer 5, die im wesentlichen von den oberen und unteren bogenförmigen Stegen 8, 9 gebildet wird. Im Bereich der Schenkel 7 des V-Profiles liegen die beiden Blechwände aufeinander. An den freien Enden der Schenkel 7 sind jeweils Hohlkammern 6 gebildet, deren Größe von der vorgesehenen Beanspruchung des Torsionsprofiles abhängt.

In Figur 2 sind zusätzlich weitere nach dem gleichen Verfahren herzustellende, geschlossene Profile dargestellt. In Figur 2 a ist der Abstand zwischen den beiden Blechwänden über das gesamte Profil gleich groß. In Figur 2 d liegen die Blechwände, abgesehen von den Hohlkammern 6 am freien Ende der Schenkel 7, immer aufeinander. In den Figuren 2 b und 2 c sind insbesondere zur Verlagerung des Schubmittelpunktes die basisseitigen Hohlkammern 5 unterschiedlich ausgebildet. Die Konstruktion nach der Figur 2 e zeichnet sich dadurch aus, daß in der Symmetrieebene der Abstand zwischen dem oberen bogenförmigen Steg 8 und dem unteren bogenförmigen Steg 9 besonders groß ist und daß dieser Abstand sich bis zum freien Ende der Schenkel 7 kontinuierlich verringert.

Die vorzugsweise in Längsrichtung der Querstreben 2 a bis 2 f verlaufende Schweißnaht ist in den Figuren beispielsweise an verschiedenen Stellen des Profiles dargestellt. Nach Figur 2 f befindet sie sich im oberen Scheitelpunkt des Steges 8 in der Symmetrieebene, nach Figur 2 e entsprechend im unteren Steg 9. Sie kann aber auch genauso, wie in Figur 2 d dargestellt, in der äußeren Blechwand eines Schenkels 7 angebracht sein.

### Bezugszeichenliste

- (1): Längslenker
- (2, 2 a bis 2 f): Querstrebe
- (3): Schweißnaht zwischen (1) und (2)
- (4): Schweißnaht an (2, 2 a bis 2 f)
- (5): basisseitige Hohlkammer
- (6): Hohlkammer am freien Ende von (7)
- (7): doppelwandiger Schenkel
- (8): oberer bogenförmiger Steg
- (9): unterer bogenförmiger Steg

## Patentansprüche

1. Verbundlenkerhinterachse mit zwei Längslenkern (1) und einer zwischen den Längslenkern (1) angeordneten, durch spanloses Umformen hergestellten, doppelwandigen und im Querschnitt im wesentlichen U- oder V-förmigen, als Torsionsprofil ausgebildeten Querstrebe (2) mit ein oder mehreren im Querschnitt der Querstrebe (2) angeordneten Hohlkammern (5), (6), **dadurch gekennzeichnet**, daß die Querstrebe (2, 2 a bis 2 f) aus einem ebenen oder im wesentlichen ebenen Blech durch Walzen hergestellt ist, über ihrer gesamten Länge einen gleichbleibenden Querschnitt besitzt und die Enden des Bleches nach dem Walzen durch eine in Längsrichtung oder im wesentlichen in Längsrichtung der Querstrebe (2) verlaufende Schweißnaht (4) verbunden sind.

2. Verbundlenkerhinterachse nach Anspruch 1, **dadurch gekennzeichnet**, daß die Hohlkammern (5), (6) an den freien Enden der Schenkel (7) und/oder im Bereich zwischen den bogenförmigen Stegen (8), (9) des Querschnittes der Querstrebe (2, 2 a bis 2 f) angeordnet sind.

3. Verbundlenkerhinterachse nach Anspruch 1 oder 2, **dadurch gekennzeichnet**, daß im Bereich der Schenkel (7) die beiden Blechwände zumindest über eine bestimmte Länge aneinanderliegen oder mit gleichbleibendem Abstand zueinander angeordnet sind.

4. Verbundlenkerhinterachse nach Anspruch 1 oder 3, **dadurch gekennzeichnet**, daß die Blechwände über den gesamten Querschnitt der Querstrebe (2 a) einen gleichbleibenden Abstand besitzen.

5. Verbundlenkerhinterachse nach Anspruch 1 oder 2, **dadurch gekennzeichnet**, daß der Abstand der Blechwände der Querstrebe (2e) im Bereich der bogenförmigen Stege (8), (9) am größten ist und sich im wesentlichen bis zu den freien Enden der Schenkel (7) kontinuierlich verringert.

6. Verbundlenkerhinterachse nach Anspruch 1, 2 oder 3, **dadurch gekennzeichnet** daß, abgesehen von den Hohlkammern (6) am freien Ende der Schenkel (7), die Blechwände über den gesamten Querschnitt der Querstrebe (2 d) aneinanderliegen.

7. Verbundlenkerhinterachse nach einem der Ansprüche 1 bis 6, **dadurch gekennzeichnet,** daß die Schweißnaht (4) mittig im oberen oder unteren bogenförmigen Steg (8), (9) oder im Bereich des oberen oder unteren bogenförmigen Steges (8), (9) verläuft.

8. Verbundlenkerhinterachse nach einem der Ansprüche 1 bis 6, **dadurch gekennzeichnet** daß die Schweißnaht (4) in der äußeren oder inneren Blechwand eines Schenkels (7) oder am freien Ende eines Schenkels (7) verläuft.
